# EUROPÄISCHE PATENTSCHRIFT

(11) **EP 1 275 890 B1**
(45) Veröffentlichungstag und Bekanntmachung des Hinweises auf die Patenterteilung: **05.07.2006**
(21) Anmeldenummer: 02012446.7
(22) Anmeldetag: 10.06.2002
(51) Int. Cl.: F16L 3/13

(54) **Rohrbefestigung**
Pipe holder
Support de tuyau

(30) Priorität: 11.07.2001 DE 10133677
(43) Veröffentlichungstag der Anmeldung: 15.01.2003
(73) Patentinhaber: VERITAS AG, 63571 Gelnhausen (DE)
(72) Erfinder: Ehret, Martin, 63579 Freigericht (DE); Kaiser, Klaus, 63599 Biebergemünd, Kassel (DE); Koestler, Thomas, 63571 Gelnhausen (DE); Desch, Thorsten, 63571 Gelnhausen-Höchst (DE)
(74) Vertreter: Grünecker, Kinkeldey, Stockmair & Schwanhäusser Anwaltssozietät

(56) Entgegenhaltungen:
- EP-A- 0 018 597
- DE-U- 29 512 650
- US-A- 4 614 321
- US-A- 4 927 103
- US-A- 5 839 703

## Beschreibung

Die Erfindung betrifft eine Rohrbefestigung mit einem Rohr und einer Befestigungseinrichtung, die einen Aufnahmeabschnitt aufweist, in dem das Rohr aufgenommen ist.

Zum Verbinden von Rohren oder zum Befestigen derselben an einem Bauelement wurden bereits verschiedenste Möglichkeiten vorgeschlagen. Hierbei hat sich besonders der Einsatz eines Clips bewährt, in welchen das Rohr hineingedrückt wird, so dass über die Hälfte des Rohres, bezogen auf seinen Querschnitt, von dem Clip umgeben ist. Das Rohr wird folglich von dem Clip formschlüssig in seiner Position gehalten. Für eine Vielzahl von Anwendungen hat sich dieser Clip als ausreichend erwiesen, als nachteilig hat sich bei einzelnen Anwendungen jedoch herausgestellt, dass das Rohr in dem Clip drehbar ist. Hier kann die Gefahr bestehen, dass das Rohr durch Verdrehen seine Position verändert, eine sichere Positionierung kann folglich nicht gewährleistet werden.

Ein derartige Befestigunsvorrichtung ist aus US-A-4 614 321 bekannt.

Es ist daher die Aufgabe der vorliegenden Erfindung eine Rohrbefestigung bereitzustellen, die eine sichere und verdrehsichere Anordnung von Rohren gewährleistet.

Diese Aufgabe wird für eine gattungsgemäße Rohrbefestigung durch die Merkmale des kennzeichnenden Teils des Anspruchs 1 gelöst.

Dem gemäß ist für eine Rohrbefestigung mit einem Rohr und einer Befestigungseinrichtung, die einen Aufnahmeabschnitt aufweist, in dem das Rohr aufgenommen wird, vorgesehen, dass das Rohr einen verformten Abschnitt aufweist, der mit einem Halteabschnitt der Befestigungseinrichtung zum drehfesten Festlegen des Rohres im Aufnahmeabschnitt des Halteabschnittes zusammenwirkt. Die Bereitstellung eines verformten Rohrabschnittes, welcher mit einer Befestigungseinrichtung zusammenwirkt, stellt hierbei eine sehr einfache und wirkungsvolle Lösung dar. Das Rohr wird weiterhin, wie bei den bekannten Befestigungen einfach in einen Halteabschnitt eingeführt, so dass keine aufwendigen Spezialwerkzeuge erforderlich sind. Gleichzeitig wird die Positionierung des Rohres z.B. an Bauelementen vereinfacht, da der im Rohr ausgebildete verformte Abschnitt die Position bereits näher bestimmt.

Die Halteeinrichtung weist zwei das Rohr umgreifende Seitenarme auf die an einem Ende miteinander verbunden sind und an ihrem gegenüberliegenden Ende mit Rastbereichen versehen sind, die mit ihren stumpfen Endflächen im aufgesteckten Zustand direkt an dem verformten Bereich des Rohres anliegen. Durch diese Ausbildung der Halteeinrichtung wird gleichzeitig ein einfaches Einführen der Halteeinrichtung über den verformten Bereich, wie auch eine ausreichende Haltekraft zur Fixierung des Rohres innerhalb der Haltevorrichtung bereitgestellt.

Hierbei ist vorgesehen, dass die beiden Rastarme von ihrem Verbindungspunkt zunächst jeweils einen sich mit einem 90° Winkel zueinander erstreckenden ersten Abschnitt aufweisen, an den sich je ein Abschnitt anschließt, die zueinander parallel angeordnet sind und die in den Rastbereichen enden und wobei die Rastbereiche einander zugewandt parallel zu den ersten Abschnitten verlaufen.

In einer vorteilhaften Weiterbildung der Erfindung das Rohr im Aufnahmeabschnitt des Halteabschnitts axial unverschiebbar angeordnet ist. Diese Ausführungsform dient wiederum der besseren bzw. genaueren Fixierung des Rohres in der Befestigungsvorrichtung. Die Position, an welcher das Rohr fixiert werden soll, ist bereits durch den verformten Abschnitt vorgegeben, so dass die Montage vereinfacht wird und das Rohr nicht zu einem späteren Zeitpunkt unabsichtlich verschoben werden kann.

Weiterhin kann es sich als vorteilhaft erweisen, wenn das Rohr lösbar mit dem Halteabschnitt der Befestigungseinrichtung zusammenwirkt. Dadurch lassen sich die Rohre im Falle einer Beschädigung einfach austauschen, ohne dass auch die gesamte Befestigungsvorrichtung erneuert werden muss.

Als günstig kann es sich erweisen, wenn der verformte Abschnitt des Rohres im Querschnitt rechteckig ausgebildet ist. Diese Rohrgeometrie hat sich als besonders geeignet zur Aufnahme der Befestigungseinrichtung erwiesen. Gleichzeitig wird ein guter Halt derselben gewährleistet.

Eine andere bevorzugte Rohrgeometrie kann erzielt werden, wenn verformte Abschnitt im Querschnitt des rohres oval ausgebildet ist. Auch diese Rohrgeometrie gewährleistet einen guten Halt des Rohres in der Befestigungseinrichtung.

Hierbei kann es sich als günstig erwiesen, wenn das Rohr durch abschnittsweises Eindrücken verformt ist. Auf diese Weise kann der verformte Bereich sehr einfach ohne aufwendige Verfahrensschritte ausgebildet werden.

Von Vorteil kann es zudem sein, wenn der lichte Querschnitt der verformten Abschnitte des Rohres kleiner ist als der benachbarter Bereiche. Dadurch ist es möglich die erfindungsgemäße Rohrbefestigung auch an Stellen einzusetzen, bei welchen nur wenig Raum zur Verfügung steht.

Als günstig kann es sich hierbei erweisen, wenn der verformte Abschnitt des Rohres im Querschnitt rechteckig ausgebildet ist und im zusammengesteckten Zustand eine Kante des Rohres in dem Verbindungspunkt zwischen den beiden Rastarmen angeordnet ist.

Ferner kann es sich als vorteilhaft erweisen, wenn die ersten Abschnitte länger ausgebildet sind als eine Seitenfläche des verformten Bereiches des Rohres im Querschnitt.

Von Vorteil kann darüber hinaus sein, dass im aufgesteckten Zustand die ersten Abschnitte an den sich von dem Verbindungspunkt aus erstreckenden Seitenflächen des verformten Bereiches des Rohres anliegen. Dadurch wird eine feste Anlage des Rohres innerhalb der Befestigungsvorrichtung erzielt und das Zusammenspiel des Rohres und der Befestigungsvorrichtung verbessert.

Ein besonders guter Halt kann innerhalb des Halteabschnitts erzielt werden, wenn die stumpfen Flächen der Rastbereiche in etwa in der Mitte der Seitenflächen des verformten Bereiches des Rohres anliegen.

In einer vorteilhaften Weiterbildung der Erfindung kann der Aufnahmebereich des Halteabschnitts elastisch ausgebildet sein. Durch eine elastische Ausbildung des Aufnahmebereichs wird die Einführung des Rohres in den Aufnahmeabschnitt deutlich erleichtert, da sich der Aufnahmeabschnitt während des Einführens verformen kann.

Als günstig kann es sich hierbei erweisen, wenn die Rastbereiche im Querschnitt in etwa halb so dick wie die ersten Abschnitte ausgebildet sind. Es hat sich herausgestellt, dass auf diese Weise eine ausreichende Elastizität des Aufnahmeabschnittes gegeben ist.

Von Vorteil kann es zudem sein, wenn das Befestigungselement einen Befestigungsabsatz zum Anbringen an einer Trägereinrichtung aufweist. Dadurch lässt sich das Anbringen der Rohrbefestigung an einem Bauteil oder dergleichen wesentlich vereinfachen.

Dabei kann es sich von Vorteil erweisen, wenn der Befestigungsabsatz an der dem Aufnahmeabschnitt abgewandten Seite des Halteabschnitts angeordnet ist. Dadurch wird das Anbringen vereinfacht und es ist z.B. möglich, zunächst die Tägereinrichtung an einem Bauteil zu befestigen und die Rohrbefestigung erst in einem nachfolgenden Schritt einzurasten.

Hierbei kann es sich als günstig erweisen, wenn der Befestigungsabsatz mit zwei Rasteinrichtungen ausgebildet ist. Durch zwei Rasteinrichtungen kann der Zug bzw. Druck im Angebrachten Zustand besonders gleichmäßig verteilt werden und so eine haltbare Verbindung erzielt werden.

Eine günstige Ausführungsform kann sich ergeben, wenn sich die Rasteinrichtungen parallel zueinander erstrecken und an ihren voneinander abgewandten Enden Rastnasen aufweisen. Die Rastnasen stellen hierbei eine sehr einfache und wirkungsvolle Befestigungsform dar.

Von Vorteil kann es sich in diesem Zusammenhang erweisen, wenn zwischen den Rasteinrichtungen ein Stegelement vorgesehen ist, das jeweils durch eine Aussparung von den Rasteinrichtungen beabstandet ist. Das Stegelement schränkt die Beweglichkeit der Rasteinrichtungen auf das notwendige Mindestmaß ein und verhindert dadurch ein zu weites Aufbiegen derselben.

Auch kann es sich als günstig erweisen, wenn die Rasteinrichtungen länger als das Stegelement ist und das Stegelement im Querschnitt wesentlich dicker als jede Rasteinrichtung. Durch diese Ausführungsform wird einerseits die Stabilität des Stegelementes und gleichzeitig eine ausreichende Verformbarkeit der Rasteinrichtungen beim Anbringen gewährleistet.

Um die Befestigungsabsatz möglichst kompakt zu bauen, kann es sich vorteilhaft erweisen, wenn sich die Rasteinrichtungen und die Stegelemente nur über einen vorbestimmten Bereich des Befestigungsabschnittes erstrecken.

Die Erfindung stellt ferner ein Trägerelement zur Aufnahme von wenigstens einer Rohrbefestigung bestehend aus einem Grundkörper und wenigstens einer in diesem ausgebildeten Aufnahmeöffnung zur Verfügung. Dieses Trägerelement ermöglich ein möglichst raumsparendes Anbringen der Rohrbefestigung und vereinfacht dadurch die Montage.

Als günstig kann es sich hierbei erweisen, wenn drei Aufnahmeöffnungen ausgebildet sind. Die Ausbildung des Trägerelements mit drei Aufnahmeöffnungen ermöglicht es drei Rohrbefestigungen parallel zueinander verlaufend anzubringen und stellt hierbei eine noch gut handzuhabende Größe dar.

Von Vorteil kann es sich herausstellen, wenn die Aufnahmeöffnungen rechteckig ausgebildet sind.

Eine günstige Ausführungsform kann sich ferner ergeben, wenn der Grundkörper rechteckig ausgebildet ist. Diese Form hat sich als praktisch in der Handhabung und einfach in der Fertigung erwiesen.

Von Vorteil kann zudem sein, wenn ein Teil des Grundkörpers abgeknickt ausgebildet ist. Insbesondere wenn mehrere Befestigungsvorrichtungen an einem Trägerelement befestigt sind, kann sich die Handhabbarkeit durch diese Ausführungsform verbessern. Gleichzeitig kann hierdurch die Anbringung in Ecken von Bauteilen vereinfacht werden.

Weiterhin kann es sich als vorteilhaft erweisen, wenn eine Befestigungslasche am Grundkörper vorgesehen ist. Dieses Merkmal dient der leichteren Befestigung des Trägerelementes an einem Bauteil oder dergleichen.

Nachfolgend wird die Wirkungs- und Funktionsweise der Erfindung anhand eines Ausführungsbeispiels näher erläutert. Es zeigen:
- Fig. 1: die erfindungsgemäße Befestigungsvorrichtung in einer Querschnittsansicht;
- Fig. 2: das Detail aus Fig. 1,
- Fig. 3: das erfindungsgemäße Trägerelement in Aussicht,
- Fig. 4: die in Fig. 3 dargestellte Trägeansicht im Schnitt X-X, und
- Fig. 5: eine dreidimensionale Ansicht der Rohrbefestigung und des Trägerelementes im Einsatz.

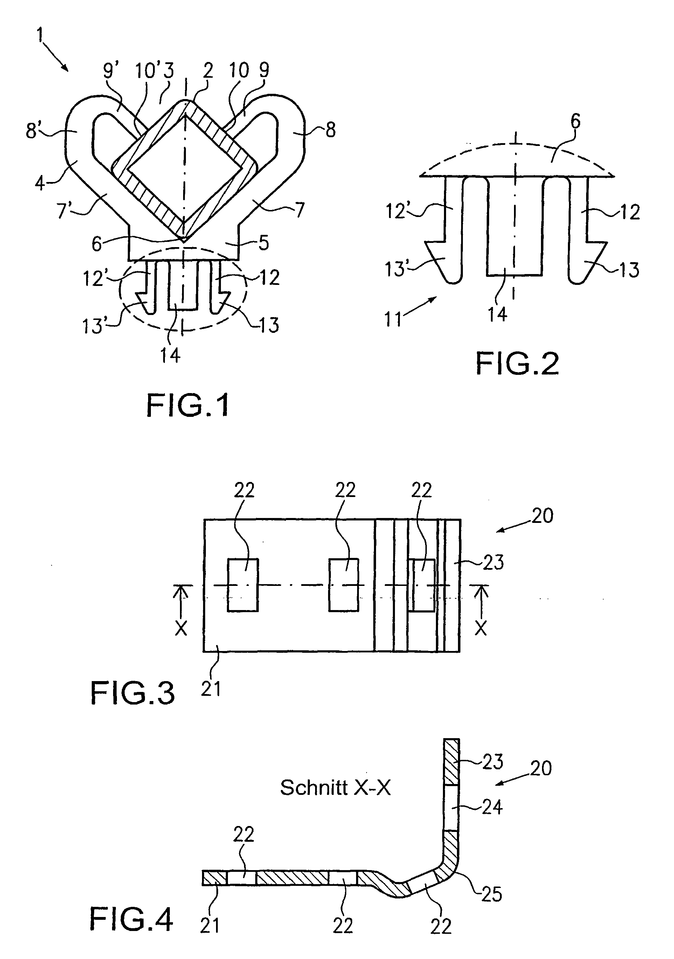

Fig. 1 zeigt die erfindungsgemäße Befestigungseinrichtung 1 in welcher ein Rohr 2 gehalten wird, jeweils in einer Querschnittsansicht. Die Befestigungseinrichtung 1 weist hierbei einen Aufnahmeabschnitt 3 auf, über welchen das Rohr 2 eingeführt wird.

Im Einzelnen setzt sich die Befestigungseinrichtung 1 aus einem den Aufnahmeabschnitt 3 aufweisenden Halteabschnitt 4 und einem Befestigungsabschnitt 5 zusammen. Der Halteabschnitt 4 hierbei ist zu einer angenommenen Mittellinie symmetrisch aufgebaut. Er umfasst zwei Seitenarme, die an ihrem einem Ende im Verbindungspunkt 6 miteinander verbunden sind. Die Seitenarme weisen verschiedene aufeinanderfolgende Abschnitte auf. Direkt an den Verbindungspunkt 6 schließen sich zunächst die ersten Abschnitte 7, 7' an, die mit einem Winkel von 90°, jeweils 45° zu der gedachten Mittellinie, auseinanderlaufen. An die ersten Abschnitte schließen sich zwei parallel zueinanderverlaufende Abschnitte 8, 8' an, die in den Rastbereichen 9, 9' enden. Die Rastbereiche 9, 9' sind hierbei parallel zu den ersten Abschnitten 7, 7' und münden in stumpfen Enden 10, 10'.

Die Wirkungsweise der einzelnen Abschnitte wird insbesondere im Zusammenspiel mit dem eingeführten Rohr 2 deutlich. Das Rohr 2 weist hierbei einen im Querschnitt zu einem Rechteck verformten Bereich auf, der sich über ein kurzes Stück des Rohres erstreckt und wobei der Querschnitt des verformten Bereiches kleiner als der des ursprünglichen Rohres ist. Der verformte Bereich des Rohres 2 wurde solchermaßen in den Aufnahmeabschnitt 3 der Befestigungseinrichtung eingeführt, dass eine Kante des verformten Bereichs des Rohres 2 in dem Verbindungspunktpunkt 6 aufliegt. Die sich unmittelbar an den Verbindungspunkt 6 der Befestigungseinrichtung 1 anschließenden ersten Abschnitte 7, 7' des Halteabschnittes liegen an den Seitenflächen des verformten Bereiches des Rohres 2 an, sind jedoch länger als die jeweilige Seitenfläche des Rohres ausgebildet. Durch die breite Auflagefläche des Rohres innerhalb des Halteabschnittes wird eine feste und sichere Positionierung gewährleistet.

Die sich an die ersten Abschnitte 7,7'anschließenden Abschnitte 8, 8' erstrecken sich mit einem vorbestimmten Abstand zu dem verformten Bereich des Rohres, berühren dieses folglich nicht, und sind ungefähr so lang ausgebildet, dass sie eine Ebene mit der Kante des verformten Bereichs des Rohres bilden, die der im Verbindungspunkt 6 angeordneten gegenüberliegt. Von den parallel zueinander verlaufenden Abschnitten 8,8' winkelt sich jeweils ein Rastarm parallel zum ersten Abschnitt ab und liegt mit seiner stumpfen Fläche unmittelbar an einer Seitenfläche des verformten Bereichs des Rohres 2 auf. Hierbei liegt das stumpfe Ende ungefähr in der Mitte des Seitenabschnittes. Auf diese Weise wird ein besonders guter Halt des Rohres in der Befestigungseinrichtung gewährleistet.

Um eine ausreichende Elastizität der Rastarme 9, 9' zu gewährleisten, sind die Rastarme ungefähr halb so dick wie die ersten Abschnitte ausgebildet. Die Elastizität der Rastarme ist notwendig, da sich die Rastarme während des Einführens der verformten Abschnitts des Rohres 2 auseinandergedrückt und dabei verformt werden, um das Rohr aufzunehmen. Zu der notwendigen Verformbarkeit des Haltabschnitts tragen gleichzeitig auch die ersten Abschnitte 7, 7' des Halteabschnittes bei, da diese länger als jeweilige anliegende Seitenfläche des verformten Bereiches des Rohrs 2 ausgebildet sind und daher leichter auseinandergedrückt werden können.

Wie ferner aus der Zeichnung deutlich wird, sind die Übergänge der ersten Abschnitte 7,7' , der parallel zueinander verlaufenden Bereiche 8,8' und der Rastarme 9,9' jeweils abgerundet ausgebildet. Auch dieser Umstand verleiht dem Halteabschnitt die notwendige Elastizität beim Einführen des Rohres.

An der vom Verbindungspunkt 6 abgewandten Seite ist am Halteabschnitt 4 ein Befestigungselement 5 angeordnet. Das Befestigungselement besteht aus einem Steg- oder Ansatzelement, welches sich von den ersten Abschnitten 7, 7' aus nach unten, d.h. von dem Aufnahmebereich 3 abgewandt erstreckt. In diesem Ansatzelement ist auch der Verbindungspunkt 6 aufgenommen. Ferner weist das Befestigungselement 5 einen Befestigungsabschnitt 11 zum Anbringen an einer Trägereinrichtung auf. Die Befestigungseinrichtung ist hierbei im Detail in Fig. 2 dargestellt.

In der Detaildarstellung in Fig. 2 sieht man, dass der Befestigungsabschnitt zwei Rastelemente 12, 12' aufweist, die an ihrem Ende, d.h., an dem von dem Halteabschnitt abgewandten Ende mit einer Rastnase 13, 13' ausgebildet sind. Die Rastnasen 13, 13' sind hierbei an den voneinander abgewandten Seiten der Rastelemente 12, 12' angeordnet.. Zwischen den beiden Rastelementen 12, 12' ist eine Stifteinrichtung 14 angeordnet, die jeweils durch Aussparungen von den Rastelementen beabstandet ist. Die Aussparung ist hierbei so ausgebildet, dass sich die Spitze der Rastnasen 13,13', wenn die Rastarme so verformt werden, dass sie sich in Anlage mit der Stifteinrichtung befinden, eine Linie mit dem äußeren Ansatzpunkt jedes Rastarmes bilden.

Die Stifteinrichtung 14 ungefähr dreimal so dick wie jedes Rastelement 12, 12' ausgebildet. Ferner wird aus der Darstellung deutlich, dass die Rastelemente etwas länger als die Stifteinrichtung ausgebildet sind.

Beim Befestigen der Befestigungseinrichtung an einer Trägereinrichtung greifen zunächst die Spitzen der Rastelemente 12, 12' in eine dafür vorgesehene Öffnung in einer Trägereinrichtung ein. Beim weiteren Einführen werden die Rastelemente durch die sich nach außen verbreiternden Rastnasen aufeinander zu nach innen verformt, wobei die zwischen den Rastelementen 12, 12' angeordnete Stifteinrichtung 14 verhindert, dass die Rastelemente 12, 12' übermäßig verformt werden. Sind die Rastelemente 12, 12' vollständig in die vorgesehene Öffnung eingeführt, verhindern die in ihre ursprüngliche Position zurückgekehrten Rastnasen ein Lösen der Befestigungseinrichtung von dem Trägerelement.

Eine erfindungsgemäße Trägereinrichtung ist in Fig. 3 und 4 in Aufsicht bzw. im Querschnitt dargestellt. Die Trägereinrichtung 20 ist vorzugsweise aus einem rechteckigen Grundelement 21 gebildet, welches wenigstens eine Aufnahmeöffnung 22 zur Aufnahme einer Befestigungsvorrichtung aufweist. Die dargestellte Trägereinrichtung weist insgesamt drei solcher Aufnahmeöffnungen 22 auf. Die Trägereinrichtung 20 weist ferner eine Befestigungslasche 23 auf, um die Trägereinrichtung an einem Bauelement befestigen zu können. Hierbei ist auch die Befestigungslasche 23 mit einer Aufnahmeöffnung 24 für eine Schraube oder dergleichen versehen.

Wie aus der Darstellung in Fig. 4 deutlich wird, ist die Trägereinrichtung vorzugsweise nicht eben ausgebildet, sondern kann einen abgewinkelten Bereich aufweisen. Gleichermaßen kann auch die Befestigungslasche 23 abgewinkelt ausgebildet sein. Es hat sich hierbei bewährt, wenn das Grundelement 21 und die Befestigungslasche 23 mit einem 90° Winkel zueinander abgewinkelt sind. Um die Anordnung der einzusetzenden Rohre zueinander zu vereinfachen, ist ferner ein Bereich der Grundplatte, welcher sich unmittelbar an die Befestigungslasche 23 anschließt, als Übergangsbereich zwischen Grundelement und Befestigungslasche ausgebildet. Dieser Übergangsbereich 25 ist zu der Grundplatte 21 wie auch zu der Befestigungslasche 23 abgewinkelt ausgebildet, wobei er zusätzlich tiefer als die Grundplatte angeordnet ist. Auch in dem Übergangsbereich 25 ist eine Aufnahmeöffnung 22 ausgebildet. Durch die Wahl des entsprechenden Winkels und dem Verhältnis des Übergangsbereiches zu der Grundplatte ist es möglich Rohre an einer einzigen Trägereinrichtung an verschiedenen Positionen zueinander zu montieren.

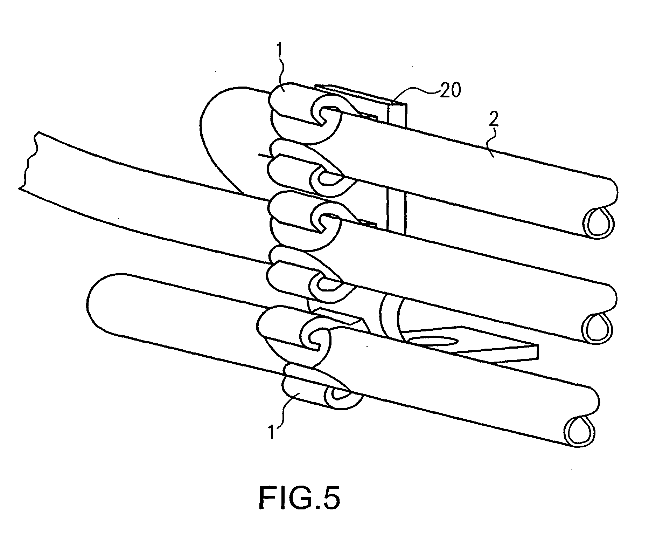

In Fig. 5 ist schließlich die in Fig. 1 und 2 dargestellt Befestigungsvorrichtung in Kombination mit der in Fig. 3 und 4 dargestellten Trägereinrichtung gezeigt, wobei drei Rohre von der Trägereinrichtung geführt werden.

## Patentansprüche

1. Rohrbefestigung mit einem Rohr (2) und einer Befestigungseinrichtung (1), die einen Aufnahmeabschnitt (3) aufweist, in dem das Rohr (2) aufgenommen wird, wobei ein Halteabschnitt (4), der Befestigungseinrichtung zwei das Rohr umgreifende Rastarme aufweist die an einem Ende miteinander verbunden sind und an ihren gegenüberliegenden Endflächen (10, 10') mit Rastbereichen (9, 9') versehen sind, wobei die beiden Rastarme von ihrem Verbindungspunkt (6) zunächst jeweils einen sich mit 90° Winkel zueinander erstreckenden ersten Abschnitt (7, 7') aufweisen, an den sich je ein Abschnitt (8, 8') anschließt, die zueinander parallel angeordnet sind und die in den Rastbereichen (9, 9') enden und wobei die Rastbereiche (9, 9') einander zugewandt parallel zu den ersten Abschnitten (7, 7') verlaufen, **dadurch gekennzeichnet, dass** das Rohr (2) einen verformten Abschnitt aufweist, der mit dem Halteabschnitt (4) der Befestigungseinrichtung (1) zum drehfesten Festlegen des Rohres (2) zusammenwirkt und dass die Seitenarme mit ihren stumpfen Endflächen im aufgesteckten Zustand des Rohrs direkt an dem verformten Bereich des Rohres (2) anliegen.

2. Rohrbefestigung nach Anspruch 1, **dadurch gekennzeichnet, dass** das Rohr (2) im Aufnahmeabschnitt (3) des Halteabschnitts (4) axial unverschiebbar angeordnet ist.

3. Rohrbefestigung nach Anspruch 1 oder 2, **dadurch gekennzeichnet, dass** das Rohr (2) lösbar mit dem Halteabschnitt (4) der Befestigungseinrichtung (1) zusammenwirkt.

4. Rohrbefestigung nach einem der Ansprüche 1 bis 3, **dadurch gekennzeichnet, dass** der verformte Abschnitt des Rohres (2) im Querschnitt rechteckig ausgebildet ist.

5. Rohrbefestigung nach einem der Ansprüche 1 bis 3, **dadurch gekennzeichnet, dass** verformte Abschnitt des Rohres (2) im Querschnitt oval ausgebildet ist.

6. Rohrbefestigung nach einem der Ansprüche 1 bis 5, **dadurch gekennzeichnet, dass** das Rohr (2) durch abschnittsweises Eindrücken verformt ist.

7. Rohrbefestigung nach einem der Ansprüche 1 bis 6, **dadurch gekennzeichnet, dass** der lichte Querschnitt der verformten Abschnitte des Rohres (2) kleiner ist als der benachbarter Bereiche.

8. Rohrbefestigung nach einem der Ansprüche 1 - 7, **dadurch gekennzeichnet, dass** der verformte Abschnitt des Rohres (2) im Querschnitt rechteckig ausgebildet ist und im zusammengesteckten Zustand eine Kante des Rohres in dem Verbindungspunkt (6) zwischen den beiden Rastarmen angeordnet ist.

9. Rohrbefestigung nach einem der Ansprüche 1 oder 8, **dadurch gekennzeichnet, dass** die ersten Abschnitte (7,7') länger ausgebildet sind als eine Seitenfläche des verformten Bereiches des Rohres (2) im Querschnitt.

10. Rohrbefestigung nach einem der Ansprüche 1 bis 9, **dadurch gekennzeichnet, dass** im aufgesteckten Zustand des Rohres die ersten Abschnitte (7,7') an den sich von dem Verbindungspunkt (6) aus erstreckenden Seitenflächen des verformten Bereiches des Rohres (2) anliegen.

11. Rohrbefestigung nach einem der Ansprüche 1 bis 10, **dadurch gekennzeichnet, dass** die stumpfen Flächen (10,10') der Rastbereiche (9,9') in etwa in der Mitte der Seitenflächen des verformten Bereiches des Rohres (2) anliegen.

12. Rohrbefestigung nach einem der Ansprüche 1 bis 11, **dadurch gekennzeichnet, dass** der Aufnahmebereich (3) des Halteabschnitts (4) elastisch ausgebildet ist.

13. Rohrbefestigung nach einem der Ansprüche 1 bis 12, **dadurch gekennzeichnet, dass** die Rastbereiche (9,9') im Querschnitt in etwa halb so dick wie die ersten Abschnitte (7,7') ausgebildet sind.

14. Rohrbefestigung nach einem der Ansprüche 1 bis 13, **dadurch gekennzeichnet, dass** die Befestigungseinrichtung (1) einen Befestigungsabsatz (5) zum Anbringen an einer Trägereinrichtung (20) aufweist.

15. Rohrbefestigung nach Anspruch 14, **dadurch gekennzeichnet, dass** der Befestigungsabsatz (5) an der dem Aufnahmeabschnitt (3) abgewandten Seite des Halteabschnitts (4) angeordnet ist.

16. Rohrbefestigung nach Anspruch 14 oder 15, **dadurch gekennzeichnet, dass** der Befestigungsabsatz (5) mit zwei Rasteinrichtungen (12,12') ausgebildet ist.

17. Rohrbefestigung nach Anspruch 16, **dadurch gekennzeichnet, dass** sich die Rasteinrichtungen (12,12') parallel zueinander erstrecken und an ihren voneinander abgewandten Enden Rastnasen (13,13') aufweisen.

18. Rohrbefestigung nach Anspruch 16 oder 17, **dadurch gekennzeichnet, dass** zwischen den Rasteinrichtungen (12,12') ein Stegelement (14) vorgesehen ist, das jeweils durch eine Aussparung von den Rasteinrichtungen (12,12') beabstandet ist.

19. Rohrbefestigung nach Anspruch 18, **dadurch gekennzeichnet, dass** die Rasteinrichtungen (12,12') länger als das Stegelement (14) ist und das Stegelement im Querschnitt wesentlich dicker als jede Rasteinrichtung.

20. Rohrbefestigung nach einem der Ansprüche 18 bis 19, **dadurch gekennzeichnet, dass** sich die Rasteinrichtungen (12,12') und das Stegelement (14) nur über einen vorbestimmten Bereich des Befestigungsabschnittes (5) erstrecken.

## Claims

1. Pipe fastening with a pipe (2) and a fastening arrangement (1) which has a receiving section (3) in which said pipe (2) is received; wherein a holding section (4) of said fastening arrangement has two latching arms which engage round the pipe, are connected to one another at one end and are provided with latching regions (9, 9') at their opposite end faces (10, 10'); wherein the two latching arms have initially, from their connection point (6), a first section (7, 7') in each case, which sections (7, 7') extend at an angle of 90° to one another and are each adjoined by a section (8, 8'), which sections (8, 8') are disposed parallel to one another and end in the latching regions (9, 9'); and wherein said latching regions (9, 9') extend, in a manner facing towards one another, parallel to the first sections (7, 7');
**characterised in that** the pipe (2) has a deformed section which interacts with the holding section (4) of the fastening arrangement (1) for the purpose of securing the pipe (2) in position in a twist-proof manner; and that, when the pipe is in the attached condition, the lateral arms rest, by means of their blunt end faces, directly against the deformed region of said pipe (2).

2. Pipe fastening according to Claim 1,
**characterised in that** the pipe (2) is disposed in the receiving section (3) of the holding section (4) in an axially non-displaceable manner.

3. Pipe fastening according to Claim 1 or 2,
**characterised in that** the pipe (2) interacts with the holding section (4) of the fastening arrangement (1) in a detachable manner.

4. Pipe fastening according to one of Claims 1 to 3,
**characterised in that** the deformed section of the pipe (2) is of rectangular construction in cross-section.

5. Pipe fastening according to one of Claims 1 to 3,
**characterised in that** the deformed section of the pipe (2) is of oval construction in cross-section.

6. Pipe fastening according to one of Claims 1 to 5,
**characterised in that** the pipe (2) is deformed by impressing it in certain sections.

7. Pipe fastening according to one of Claims 1 to 6,
**characterised in that** the clear cross-section of the deformed sections of the pipe (2) is smaller than that of the adjacent regions.

8. Pipe fastening according to one of Claims 1 to 7,
**characterised in that** the deformed section of the pipe (2) is of rectangular construction in cross-section and, in the assembled condition, one edge of the pipe is disposed in the connection point (6) between the two latching arms.

9. pipe fastening according to one of Claims 1 or 8,
**characterised in that** the first sections (7, 7') are of longer construction than one lateral face of the deformed region of the pipe (2) in cross-section.

10. Pipe fastening according to one of Claims 1 to 9,
**characterised in that**, when the pipe is in the attached condition, the first sections (7, 7') rest against those lateral faces of the deformed region of the pipe (2) which extend from the connection point (6).

11. Pipe fastening according to one of Claims 1 to 10,
**characterised in that** the blunt faces (10, 10') of the latching regions (9, 9') rest against the lateral faces of the deformed region of the pipe (2) approximately in the centre of said lateral faces.

12. Pipe fastening according to one of Claims 1 to 11,
**characterised in that** the receiving region (3) of the holding section (4) is of elastic construction.

13. Pipe fastening according to one of Claims 1 to 12,
**characterised in that** the latching regions (9, 9') are constructed so as to be approximately half as thick, in cross-section, as the first sections (7, 7').

14. Pipe fastening according to one of Claims 1 to 13,
**characterised in that** the fastening arrangement (1) has a fastening heel (5) for attachment to a carrier arrangement (20).

15. Pipe fastening according to Claim 14,
**characterised in that** the fastening heel (5) is disposed on that side of the holding section (4) which faces away from the receiving section (3).

16. Pipe fastening according to Claim 14 or 15,
**characterised in that** the fastening heel (5) is constructed with two latching arrangements (12, 12').

17. Pipe fastening according to Claim 16,
**characterised in that** the latching arrangements (12, 12') extend parallel to one another and have latching noses (13, 13') at their ends that face away from one another.

18. Pipe fastening according to Claim 16 or 17,
**characterised in that** a web element (14), which is spaced apart from each of the latching arrangements (12, 12') by a clearance, is provided between said latching arrangements (12, 12').

19. Pipe fastening according to Claim 18,
**characterised in that** the latching arrangements (12, 12') are longer than the web element (14) and said web element is substantially thicker, in cross-section, than each latching arrangement.

20. Pipe fastening according to one of Claims 18 to 19,
**characterised in that** the latching arrangements (12, 12') and the web element (14) extend only over a predetermined region of the fastening section (5).

## Revendications

1. Fixation de tuyau avec un tuyau (2) et un dispositif de fixation (1) qui comporte une partie réceptrice (3) dans laquelle le tuyau (2) se loge, une partie de retenue (4) du dispositif de fixation comportant deux bras d'arrêt qui entourent le tuyau et qui sont reliés ensemble à une extrémité et sont munis de zones d'arrêt (9, 9') au niveau de leurs surfaces terminales qui se font face (10, 10'), les deux bras d'arrêt comportant, à partir de leur jonction (6), tout d'abord des premiers segments (7, 7') qui s'étendent en définissant un angle de 90° et auxquels se raccordent des segments (8, 8') qui sont disposés parallèlement et qui se terminent par des zones d'arrêt (9, 9'), et les zones d'arrêt (9, 9') étant tournées l'une vers l'autre parallèlement aux premiers segments (7, 7'), **caractérisée en ce que** le tuyau (2) comporte une section déformée qui coopère avec la partie de retenue (4) du dispositif de fixation (1) pour immobiliser le tuyau (2) en rotation et **en ce que**, lorsque le tuyau est à l'état fixé, les bras latéraux prennent appui directement contre la zone déformée du tuyau (2) par leurs surfaces terminales aplaties.

2. Fixation de tuyau selon la revendication 1, **caractérisée en ce que** le tuyau (2) est disposé dans la partie réceptrice (3) de la partie de retenue (4) de manière qu'il ne puisse pas se déplacer axialement.

3. Fixation de tuyau selon la revendication 1 ou 2, **caractérisée en ce que** le tuyau (2) coopère avec la partie de retenue (4) du dispositif de fixation (1) de manière détachable.

4. Fixation de tuyau selon l'une des revendications 1 à 3, **caractérisée en ce que** la section déformée du tuyau (2) est rectangulaire en coupe transversale.

5. Fixation de tuyau selon l'une des revendications 1 à 3, **caractérisée en ce que** la section déformée du tuyau (2) est ovale en coupe transversale.

6. Fixation de tuyau selon l'une des revendications 1 à 5, **caractérisée en ce que** le tuyau (2) est déformé par enfoncement local.

7. Fixation de tuyau selon l'une des revendications 1 à 6, **caractérisée en ce que** l'ouverture de passage des sections déformées du tuyau (2) est plus petite que celle de zones voisines.

8. Fixation de tuyau selon l'une des revendications 1 à 7, **caractérisée en ce que** la section déformée du tuyau (2) est rectangulaire en coupe transversale et **en ce que**, à l'état assemblé, une arête du tuyau est disposée à la jonction (6) entre les deux bras d'arrêt.

9. Fixation de tuyau selon l'une des revendications 1 ou 8, **caractérisée en ce que** les premiers segments (7, 7') sont plus longs qu'une face latérale de la zone déformée du tuyau (2) en coupe transversale.

10. Fixation de tuyau selon l'une des revendications 1 à 9, **caractérisée en ce que**, lorsque le tuyau est à l'état fixé, les premiers segments (7, 7') prennent appui contre les faces latérales de la zone déformée du tuyau (2) s'étendant à partir de la jonction (6).

11. Fixation de tuyau selon l'une des revendications 1 à 10, **caractérisée en ce que** les surfaces aplaties (10, 10') des zones d'arrêt (9, 9') prennent appui à peu près au milieu des faces latérales de la zone déformée du tuyau (2).

12. Fixation de tuyau selon l'une des revendications 1 à 11, **caractérisée en ce que** la zone de réception (3) de la partie de retenue (4) est élastique.

13. Fixation de tuyau selon l'une des revendications 1 à 12, **caractérisée en ce que**, en coupe transversale, les zones d'arrêt (9, 9') sont à peu près deux fois moins grosses que les premiers segments (7, 7').

14. Fixation de tuyau selon l'une des revendications 1 à 13, **caractérisée en ce que** le dispositif de fixation (1) comporte un épaulement de fixation (5) pour la pose sur un dispositif porteur (20).

15. Fixation de tuyau selon la revendication 14, **caractérisée en ce que** l'épaulement de fixation (5) est disposé du côté de la partie de retenue (4) qui est à l'opposé de la partie réceptrice (3).

16. Fixation de tuyau selon la revendication 14 ou 15, **caractérisée en ce que** l'épaulement de fixation (5) comporte deux dispositifs d'encliquetage (12, 12').

17. Fixation de tuyau selon la revendication 16, **caractérisée en ce que** les dispositifs d'encliquetage (12, 12') s'étendent parallèlement entre eux et comportent des saillies d'encliquetage (13, 13') à leurs extrémités situées à l'opposé l'une de l'autre.

18. Fixation de tuyau selon la revendication 16 ou 17, **caractérisée en ce qu'**il est prévu, entre les dispositifs d'encliquetage (12, 12'), un élément formant tenon (14) qui est séparé de chaque dispositif d'encliquetage (12, 12') par un évidement.

19. Fixation de tuyau selon la revendication 18, **caractérisée en ce que** les dispositifs d'encliquetage (12, 12') sont plus longs que l'élément formant tenon (14) et **en ce que** l'élément formant tenon est sensiblement plus gros en coupe transversale que chaque dispositif d'encliquetage.

20. Fixation de tuyau selon l'une des revendications 18 à 19, **caractérisée en ce que** les dispositifs d'encliquetage (12, 12') et l'élément formant tenon (14) ne s'étendent que sur une zone donnée de la partie de fixation (5).
